# EUROPEAN PATENT SPECIFICATION

(11) **EP 2 338 655 B1**
(45) Date of publication and mention of the grant of the patent: **20.08.2014**
(21) Application number: 10195479.0
(22) Date of filing: 16.12.2010
(51) Int. Cl.: B29B 7/32, B29B 7/60, B29B 7/72, B29B 7/74, B29B 7/94, B29D 30/08, B29C 47/50, B29C 47/00, B29B 7/00, B29D 30/16, B29C 47/36, B29D 30/30

(54) **Continuous mixing apparatus and method**
Vorrichtung und Verfahren für kontinuierliches Mischen
Appareil et procédé de mélange continu

(30) Priority: 23.12.2009 US 289630 P; 19.11.2010 US 950190
(43) Date of publication of application: 29.06.2011
(73) Proprietor: The Goodyear Tire & Rubber Company, Akron, OH 44316-0001 (US)
(72) Inventor: Burg, Gary Robert, Massillon, OH 44646 (US)
(74) Representative: Kutsch, Bernd

(56) References cited:
- EP-A2- 2 177 342
- WO-A1-97/09162
- JP-A- 59 081 602
- JP-A- 2004 216 725
- US-A- 5 725 814

## Description

### Field of the Invention

The invention relates in general to the mixing of rubber compositions as used in tire manufacturing, and more particularly to continuous production of custom rubber mixtures.

### Background of the Invention

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a banbury mixer, which involves expensive capital expenditures. Furthermore, banbury mixers have difficulty mixing up tough or stiff rubber compounds. The compounds generated from the banbury mixers are typically shipped to the tire building plants, thus requiring additional costs for transportation. The shelf life of the compounds is not finite, and if not used within a certain time period, is scrapped.

Thus an improved method and apparatus is desired which substantially reduces the need for the use of banbury mixers while providing an apparatus and methodology to provide for custom mixing at the tire building machine by blending of two or more compounds together, and controlling the ratio of the compounds and other additives. Both non-productive compounds and/or productive compounds could be blended together. It is further desired to have a system at the tire building machine which provides for the ability to manufacture customizable compounds with curing accelerators. Yet an additional problem to be solved is to generate the compounds continuously at the tire building machine.

JP-A- 2004-216725 discloses an apparatus according to the preamble of claim 1 and describes an extrusion device comprising a plurality of extruders followed by respectively assigned gear pumps wherein the material provided by the respective extruder/gear pump combination is fed into a die for extruding a strip. The strip may be extruded onto a rotating surface.

### Summary of the Invention

The invention provides in a first aspect an apparatus for applying a mixture in accordance with claim 1.

The invention provides in a second aspect a method of applying a blended rubber composition in accordance with claim 10.

Dependent claims refer to preferred embodiments of the invention

### Definitions

"Laminate structure" means an unvulcanized structure made of one or more layers of tire or elastomer components such as the innerliner, sidewalls, and optional ply layer.
"Productive compound" means a rubber compound that includes accelerators, sulfur and other materials needed to cure the rubber.
"Non-productive compound" means a rubber compound that does not have one or more of the following items: 1) accelerator; 2) sulfur; or 3) curing agent(s).

### Brief Description of the Drawings

The invention will be described by way of example and with reference to the accompanying drawings in which:
FIG. 1 is a schematic of a mixing system of the present invention; and
FIG. 2 is a schematic of a second embodiment of the present invention.

### Detailed Description of the Invention

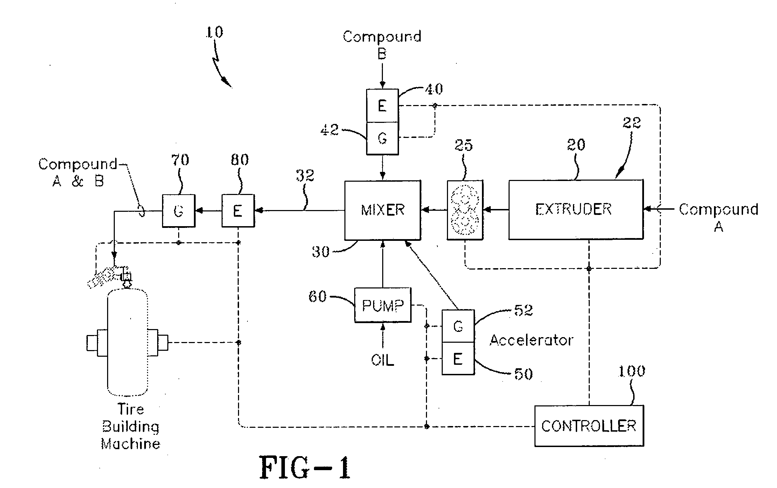

Figure 1 illustrates a first embodiment of a method and apparatus 10 for a continuous mixing system suitable for use for making rubber compositions for tires or tire components. The continuous mixing system is not limited to tire applications and may be used for example, to make other rubber components not related to tires such as conveyors, hoses and belts. The mixing system may be provided directly at the tire building machinery for direct application of the rubber composition to a tire building drum or other tire building apparatus. As shown in Figure 1, a continuous mixing apparatus 10 is shown and which includes an extruder 20. The extruder 20 has an inlet 22 for receiving a first compound A, which may be a productive or non-productive rubber composition. The extruder may comprise any commercial extruder suitable for processing of rubber or elastomer compounds. The extruder may comprise a commercially available extruder commonly known by those skilled in the art as a pin type extruder, a twin screw, a ring extruder or a single screw extruder. One commercially available extruder suitable for use is a multicut transfermix (MCT) extruder, sold by VMI-AZ GmbH, The Netherlands. Preferably, the extruder has an L/D of 8, but it may also range from 5 to 25. A pin type or MCT type of extruder, or combination thereof, is preferred, but is not limited to same.

The extruder functions to warm up the compound A to the temperature in the range of 80°C to 150°C, preferably 90°C to 120°C, and to masticate the rubber composition as needed. Compound A exits the extruder and is fed into a gear pump 25. The gear pump 25 functions as a metering device and a pump. The gear pump may have gears such as planetary gears, bevel gears or other gears. Output from the gear pump 25 is fed into a mixing or blending chamber 30. The mixing chamber may be any commercial mixing device such as a MCTD sold by VMI, or a static mixer. As compound A is fed into the mixing chamber, it is mixed with compound B.

Compound B may also comprise a productive or non-productive rubber composition. Examples of compound B compositions are described in more detail, below. Compound B is first extruded by extruder 40 and gear pump 42 prior to entering the mixing chamber 30. The extruder 40 may be a conventional pin type, ring type, dual screw or single screw type extruder. The gear pump 42 functions as a metering device and a pump and may have gears such as planetary gears, bevel gears or other gears. The extruder 40 and gear pump 42 may also be a combination unit.

Oil is injected into the mixer via an oil pump 60. The oil controls the viscosity of the compound mixture in the mixing chambers. The apparatus may further include one or more accelerators which may be optionally added to the mixing chamber 30 via an extruder 50 and a gear pump 52 (or combination thereof). If more than one accelerator is used, they may be added into the mixing chamber 30 separately or together. For example, a primary accelerator and a secondary accelerator may both be added. Accelerators are used to control the time and/or temperature required for vulcanization and to improve the properties of the rubber. The accelerator may be in powder form or an encapsulated powder into a resin or rubber base. Examples of accelerator compositions are described in more detail, below.

A curative agent or precursor is added to the mixer via mechanical means such as a gear pump or extruder or pump or combination thereof. The mechanical device selected depends upon the phase of the curative agent. One example of a curative agent is sulfur. The sulfur may be added in liquid or solid form.

Thus, the apparatus of the invention produces a third compound C which is a precise mixture of the A and B compound, optional oil and optional accelerant and optional curative agent or precursor. The ratio of the volumetric flow rate of compound A to the volumetric flow rate of compound B is precisely controlled by the ratio of the speed of the gear pump 25 for compound A and the speed of gear pump 42 for compound B. For example, the compound output 32 from the system mixer may comprise a mixture of 20% of compound A and 80% of compound B by volume. Alternatively, the compound output from the system may comprise a mixture of 20% of compound B and 80% of compound A by volume. The ratio of compound A to compound B can range from 0:100% to 100%:0 or from 5:95 to 95:5. The ratio may be adjusted about instantaneously by varying the speeds of gear pumps 25 and 42 by a computer controller 100. The computer controller 100 may additionally controls the extruder and gear pump operating parameters such as operating pressure, operating temperature, pump or screw speed.

Preferably, the computer controller 100 sets a pressure target value for the exit pressure of each extruder. The extruder speed is controlled by the controller, and is varied until the pressure target is met. The extruder exit pressure target value affects the quality of mixing by causing backflow of the material in the extruder.

The compound mixture of A and B exits the mixer 30, and enters gear pump 70. The apparatus 10 is preferably located at or near a tire building station. Gear pump 70 preferably applies the compound formulation output from the mixer exit directly onto the tire building machine. The tire building machine may be a tire building drum or core. An optional extruder 80 may be used upstream of gear pump 70 or in combination thereof.

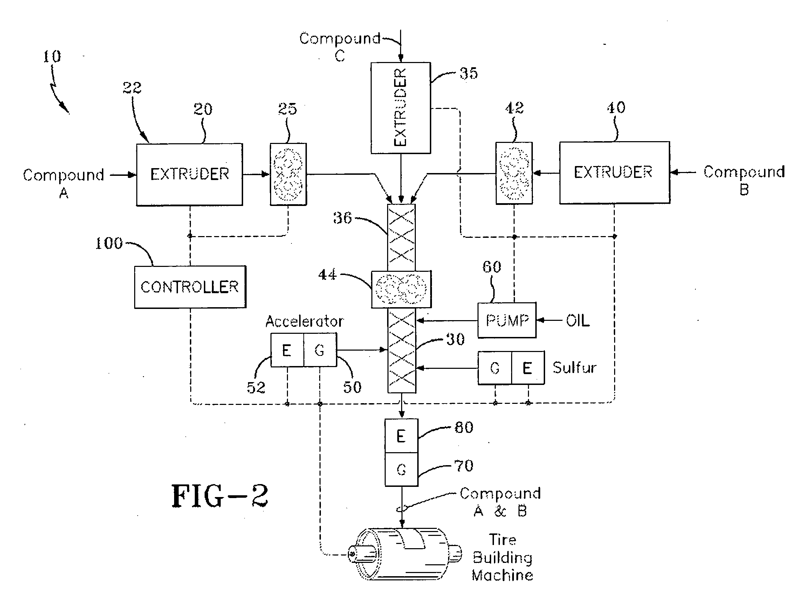

Figure 2 illustrates a second embodiment of the invention. Compound A enters extruder 20 at inlet 22 and is then fed into gear pump 25. Compound B is fed into extruder 40 and then into gear pump 42. Optional compound C may be added with compound A and B into a first mixer 36 via optional extruder 35. Compound A and compound B and optionally compound C are then fed into a first mixer 36 where they are mixed together. The first mixer 36 may be a static or dynamic mixing device. The compound mixture of A+B exits the mixing chamber and is pumped by an optional gear pump 44. The compound mixture of A, B and optionally C is then fed into a second mixer 30, which may be static or dynamic. Oil is added to the compound mixture of A+B via pump 60. Optionally, sulfur and one or more accelerants may be added to the A+B mixture via a gear pump or other mechanical device.

An accelerator is added to the final mixture just upstream of the gear pump extruder 70, 80.

The final mixture exits the mixing chamber and is fed into an extruder gear pump 70, 80 which is located at the tire building machine. The final compound mixture may be extruded directly onto the tire building machine in one or more strips to form the tire component as desired.

### I. Accelerator Compositions

In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from about 0.05 to about 3 phr, in order to activate and to improve the properties of the vulcanized rubber. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

### ll. Rubber Compositions

Representative rubbers that may be used in the rubber compound include acrylonitrile/diene copolymers, natural rubber, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers may be used. Each rubber layer may comprise the same rubber composition or alternating layers may be of different rubber composition.

The rubber compound may contain a platy filler. Representative examples of platy fillers include talc, clay, mica and mixture thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, processing aids, antioxidants, antiozonants, stearic acid, activators, waxes, oils, sulfur vulcanizing agents and peptizing agents. As known to those skilled in the art, depending on the desired degree of abrasion resistance, and other properties, certain additives mentioned above are commonly used in conventional amounts. Typical additions of carbon black comprise from about 10 to 150 parts by weight of rubber, preferably 50 to 100 phr. Typical amounts of silica range from 10 to 250 parts by weight, preferably 30 to 80 parts by weight and blends of silica and carbon black are also included. Typical amounts of tackifier resins comprise from 2 to 10 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid comprise 0.50 to about 3 phr. Typical amounts of accelerators comprise 1 to 5 phr. Typical amounts of waxes comprise 1 to 5 phr. Typical amounts of oils comprise 2 to 30 phr. Sulfur vulcanizing agents, such as elemental sulfur, amine disulfides, polymeric polysulfides, sulfur olefin adducts, and mixtures thereof, are used in an amount ranging from 0.2 to 8 phr. Typical amounts of peptizers comprise from 0.1 to 1 phr.

### III. Oil

The rubber composition also includes up to 70 phr of processing oil. Processing oil may be included in the rubber composition as extending oil typically used to extend elastomers. Processing oil is included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

## Claims

1. An apparatus for applying a mixture of a first compound (A) and a second compound (B), the apparatus (10) comprising:
a first extruder (20) and a first gear pump (25) for a first compound (A);
a second extruder (40) and a second gear pump (42) for a second compound (B);
a third extruder (50) and a third gear pump (52) for an accelerator mixture; and
a mixing device (30) for mixing together the first compound (A), the second compound (B) and the accelerator mixture, wherein the mixing device (30) is located downstream of the first and second extruders (20, 40) and the first and second gear pumps (25, 42), **characterized in that** the apparatus further comprises a pump (60) for pumping oil into the mixing device (30) and mechanical means for adding a curative agent or precursor to the mixing device (30).

2. The apparatus of claim 1 wherein the mixing device (30) is located downstream of the first, second and third extruders (20, 40, 50) and the first, second and third gear pumps (25, 42, 52).

3. The apparatus of claim 1 or 2 further comprising a controller (100) which is in electrical communication with the first, second and third extruders (20, 40, 50) and the first, second and third gear pumps (25, 42, 52).

4. The apparatus of at least one of the previous claims wherein the mixing device (30) is a static mixer.

5. The apparatus of at least one of the previous claims further comprising a fourth gear pump (70) and a fourth extruder (80).

6. The apparatus of claim 5 wherein the fourth gear pump (70) and the fourth extruder (80) is located downstream of the mixing device (30).

7. The apparatus of at least one of the previous claims further comprising a first mixing device (36) located upstream of the mixing device (30).

8. The apparatus of claim 7 wherein a gear pump (44) is located between the first mixing device (36) and the mixing device (30).

9. The apparatus of claim 1 wherein the mechanical means is a gear pump or an extruder or a pump or a combination thereof.

10. A method of applying a blended rubber composition onto a tire building drum or a tire building core, the method comprising the steps of:
providing a first extruder (20) and a first gear pump (25) for a first compound (A);
providing a second extruder (40) and a second gear pump (42) for a second compound (B);
providing a third extruder (50) and a third gear pump (52) for an accelerator mixture;
providing a mixing device (30) located downstream of the first and second extruders (20, 40) and the first and second gear pumps (25, 42) and mixing together the first compound (A), the second compound (B) and the accelerator mixture in the mixing device (30);
providing a pump (60) and pumping oil into the mixing device (30);
providing mechanical means and adding a curative agent or precursor to the mixing device (30) using the mechanical means; and
applying one or more strips of the blended rubber composition onto the tire building drum or the tire building core.

11. The method of claim 10 wherein the third extruder (50) and the third gear (52) pump is located downstream of the mixing of the first compound (A) and the second compound (B).

12. The method of claim 10 or 11 wherein the one or more strips of the blended rubber composition are applied directly onto the tire building drum or the tire building core.

13. The method of claim 12 wherein the one or more strips of the blended rubber composition are applied directly onto the tire building drum or the tire building core using an extruder nozzle or a die located downstream of the mixing device and/or downstream of a fourth gear pump (70) and a fourth extruder (80).

## Patentansprüche

1. Vorrichtung zur Anbringung eines Gemischs aus einer ersten Verbindung (A) und einer zweiten Verbindung (B), wobei die Vorrichtung (10) umfasst:
einen ersten Extruder (20) und eine erste Zahnradpumpe (25) für eine erste Verbindung (A);
einen zweiten Extruder (40) und eine zweite Zahnradpumpe (42) für eine zweite Verbindung (B);
einen dritten Extruder (50) und eine dritte Zahnradpumpe (52) für ein Beschleunigungsmittelgemisch; und
eine Mischvorrichtung (30) zum Vermischen der ersten Verbindung (A), der zweiten Verbindung (B) und des Beschleunigungsmittelgemischs, wobei die Mischvorrichtung (30) sich stromabwärts von dem ersten und zweiten Extruder (20, 40) und der ersten und zweiten Zahnradpumpe (25, 42) befindet, **dadurch gekennzeichnet, dass** die Vorrichtung weiter eine Pumpe (60) zum Pumpen von Öl in die Mischvorrichtung (30) und mechanische Mittel zum Hinzufügen eines Vulkanisationshilfsmittels oder Vorläufers zu der Mischvorrichtung (30) umfasst.

2. Vorrichtung nach Anspruch 1, wobei die Mischvorrichtung (30) sich stromabwärts von dem ersten, zweiten und dritten Extruder (20, 40, 50) und der ersten, zweiten und dritten Zahnradpumpe (25, 42, 52) befindet.

3. Vorrichtung nach Anspruch 1 oder 2, weiter ein Steuergerät (100) umfassend, das sich in elektrischer Verbindung mit dem ersten, zweiten und dritten Extruder (20, 40, 50) und der ersten, zweiten und dritten Zahnradpumpe (25, 42, 52) befindet.

4. Vorrichtung nach mindestens einem der vorgenannten Ansprüche, wobei die Mischvorrichtung (30) ein statischer Mischer ist.

5. Vorrichtung nach mindestens einem der vorgenannten Ansprüche, weiter eine vierte Zahnradpumpe (70) und einen vierten Extruder (80) umfassend.

6. Vorrichtung nach Anspruch 5, wobei die vierte Zahnradpumpe (70) und der vierte Extruder (80) sich stromabwärts von der Mischvorrichtung (30) befinden.

7. Vorrichtung nach mindestens einem der vorgenannten Ansprüche, weiter eine stromaufwärts von der Mischvorrichtung (30) befindliche erste Mischvorrichtung (36) umfassend.

8. Vorrichtung nach Anspruch 7, wobei sich eine Zahnradpumpe (44) zwischen der ersten Mischvorrichtung (36) und der Mischvorrichtung (30) befindet.

9. Vorrichtung nach Anspruch 1, wobei das mechanische Mittel eine Zahnradpumpe oder ein Extruder oder eine Pumpe oder eine Kombination davon ist.

10. Verfahren zur Anbringung einer vermischten Kautschukzusammensetzung auf einer Reifenbautrommel oder einem Reifenbaukern, wobei das Verfahren die Schritte umfasst des:
Vorsehens eines ersten Extruders (20) und einer ersten Zahnradpumpe (25) für eine erste Verbindung (A);
Vorsehens eines zweiten Extruders (40) und einer zweiten Zahnradpumpe (42) für eine zweite Verbindung (B);
Vorsehens eines dritten Extruders (50) und einer dritten Zahnradpumpe (52) für ein Beschleunigungsmittelgemisch;
Vorsehens einer stromabwärts von dem ersten und zweiten Extruder (20, 40) und der ersten und zweiten Zahnradpumpe (25, 42) befindlichen Mischvorrichtung (30) und Vermischen der ersten Verbindung (A), der zweiten Verbindung (B) und des Beschleunigungsmittelgemischs in der Mischvorrichtung (30);
Vorsehens einer Pumpe (60) und Pumpens von Öl in die Mischvorrichtung (30);
Vorsehens mechanischer Mittel und Hinzufügen eines Vulkanisationshilfsmittels oder Vorläufers zu der Mischvorrichtung (30), unter Anwendung der mechanischen Mittel; und
Anbringens eines oder mehrerer Streifen der vermischten Kautschukzusammensetzung auf der Reifenbautrommel oder dem Reifenbaukern.

11. Verfahren nach Anspruch 10, wobei der dritte Extruder (50) und die dritte Zahnradpumpe (52) sich stromabwärts vom Mischen der ersten Verbindung (A) und der zweiten Verbindung (B) befinden.

12. Verfahren nach Anspruch 10 oder 11, wobei der eine oder die mehreren Streifen der vermischten Kautschukzusammensetzung direkt auf der Reifenbautrommel oder dem Reifenbaukern angebracht werden.

13. Verfahren nach Anspruch 12, wobei der eine oder die mehreren Streifen der vermischten Kautschukzusammensetzung direkt auf der Reifenbautrommel oder dem Reifenbaukern angebracht werden, unter Verwendung einer Extruderdüse oder eines Mundstücks, die bzw. das sich stromabwärts von der Mischvorrichtung und/oder stromabwärts von einer vierten Zahnradpumpe (70) und einem vierten Extruder (80) befindet.

## Revendications

1. Appareil pour appliquer un mélange d'un premier composé (A) et d'un deuxième composé (B), l'appareil comprenant :
une première extrudeuse (20) et une première pompe à engrenages (25) pour un premier composé (A) ;
une deuxième extrudeuse (40) et une deuxième pompe à engrenages (42) pour un deuxième composé (B) ;
une troisième extrudeuse (50) et une troisième pompe à engrenages (52) pour un mélange faisant office d'accélérateur ; et
un dispositif de mélange (30) pour mélanger les uns aux autres le premier composé (A), le deuxième composé (B) et le mélange faisant office d'accélérateur, le dispositif de mélange (30) étant disposé en aval des première et deuxième extrudeuses (20, 40) et des première et deuxième pompes à engrenages (25, 42), **caractérisé en ce que** l'appareil comprend en outre une pompe (60) pour pomper de l'huile dans le dispositif de mélange (30) et un moyen mécanique pour ajouter un agent ou un précurseur de la vulcanisation au dispositif de mélange (30).

2. Appareil selon la revendication 1, dans lequel le dispositif de mélange (30) est situé en aval de la première, de la deuxième et de la troisième extrudeuse (20, 40, 50) et de la première, de la deuxième et de la troisième pompe à engrenages (25, 42, 52).

3. Appareil selon la revendication 1 ou 2, comprenant en outre un contrôleur (100) qui est mis en communication électrique avec la première, la deuxième et la troisième extrudeuse (20, 40, 50) et la première, la deuxième et la troisième pompe à engrenages (25, 42, 52).

4. Appareil selon au moins une des revendications précédentes, dans lequel le dispositif de mélange (30) est un mélangeur statique.

5. Appareil selon au moins une des revendications précédentes, comprenant en outre un quatrième pompe à engrenages (70) et une quatrième extrudeuse (80).

6. Appareil selon la revendication 5, dans lequel la quatrième pompe à engrenages (70) et la quatrième extrudeuse (80) sont disposées en aval du dispositif de mélange (30).

7. Appareil selon au moins une des revendications précédentes, comprenant en outre un premier dispositif de mélange (36) disposé en amont du dispositif de mélange (30).

8. Appareil selon la revendication 7, dans lequel une pompe à engrenages (44) est disposée entre le premier dispositif de mélange (36) et le dispositif de mélange (30).

9. Appareil selon la revendication 1, dans lequel le moyen mécanique est une pompe à engrenages ou une extrudeuse ou bien une pompe ou une de leurs combinaisons.

10. Procédé d'application d'une composition mélangée de caoutchouc sur un tambour de confection de bandage pneumatique ou sur une partie centrale de confection de bandage pneumatique, le procédé comprenant les étapes consistant à :
procurer une première extrudeuse (20) et une première pompe à engrenages (25) pour un premier composé (A) ;
procurer une deuxième extrudeuse (40) et une deuxième pompe à engrenages (42) pour un deuxième composé (B) ;
procurer une troisième extrudeuse (50) et une troisième pompe à engrenages (52) pour un mélange faisant office d'accélérateur ; et
procurer un dispositif de mélange (30) disposé en aval des première et deuxième extrudeuses (20, 40) et des première et deuxième pompes à engrenages (25, 42) et mélanger les uns aux autres le premier composé (A), le deuxième composé (B) et le mélange faisant office d'accélérateur dans le dispositif de mélange (30) ;
procurer une pompe (60) et pomper de l'huile dans le dispositif de mélange (30) ;
procurer un moyen mécanique et ajouter un agent ou un précurseur de la vulcanisation au dispositif de mélange (30) en utilisant le moyen mécanique ; et
appliquer un ou plusieurs bandes de la composition mélangée de caoutchouc sur le tambour de confection de bandage pneumatique ou sur la partie centrale de confection de bandage pneumatique.

11. Procédé selon la revendication 10, dans lequel la troisième extrudeuse (50) et la troisième pompe à engrenages (52) sont disposées en aval du mélange du premier composé (A) et du deuxième composé (B).

12. Procédé selon la revendication 10 ou 11, dans lequel lesdites une ou plusieurs bandes de la composition mélangée de caoutchouc sont appliquées directement sur le tambour de confection de bandage pneumatique ou sur la partie centrale de confection de bandage pneumatique.

13. Procédé selon la revendication 10 ou 11, dans lequel lesdites une ou plusieurs bandes de la composition mélangée de caoutchouc sont appliquées directement sur le tambour de confection de bandage pneumatique en utilisant une filière d'extrudeuse ou une matrice disposée en aval du dispositif de mélange et/ou en aval d'une quatrième pompe à engrenages (70) et d'une quatrième extrudeuse (80).
